# EUROPEAN PATENT APPLICATION

(11) **EP 4 730 632 A1**
(43) Date of publication of application: **22.04.2026**
(21) Application number: 24855600.3
(22) Date of filing: 02.08.2024
(51) Int. Cl.: H02M 1/42

(54) **PFC TOTEM POLE CIRCUIT AND ZVS IMPLEMENTATION METHOD**

(30) Priority: 24.08.2023 CN 202311080297
(71) Applicant: ZTE CORPORATION, Shenzhen, Guangdong 518057 (CN)
(72) Inventor: ZHOU, Jingxuan, Shenzhen, Guangdong 518057 (CN); ZHENG, Pingkang, Shenzhen, Guangdong 518057 (CN); XIAO, Bingbing, Shenzhen, Guangdong 518057 (CN); CUI, Yingchun, Shenzhen, Guangdong 518057 (CN); HU, Yangxiang, Shenzhen, Guangdong 518057 (CN); HU, Le, Shenzhen, Guangdong 518057 (CN)
(74) Representative: Ziebig Hengelhaupt Intellectual Property Attorneys Patentanwaltskanzlei PartGmbB
(86) International application number: PCT/CN2024/109365
(87) International publication number: WO 2025/039874

(57) **Abstract**

The present application provides a PFC totem pole circuit and a ZVS implementation method. The PFC totem pole circuit comprises an alternating-current power supply, an inductor, a first switch transistor, a second switch transistor, a third switch transistor, a fourth switch transistor, a current acquisition module, a voltage acquisition module, and a capacitor, wherein the third switch transistor is a main transistor and the fourth switch transistor is a flyback diode, or the fourth switch transistor is a main transistor and the third switch transistor is a flyback diode, the current acquisition module is connected in series with the inductor and the alternating-current power supply, the voltage acquisition module is connected in parallel with the inductor, the current acquisition module is configured to acquire an inductor current signal of the inductor, the inductor current signal is used for controlling the flyback diode, the voltage acquisition module is configured to acquire an inductor voltage signal of the inductor, and the inductor voltage signal is used for controlling the main transistor.

## Description

### CROSS-REFERENCE TO RELATED APPLICATIONS

The present application is proposed based on and claims priority to Chinese Application No. 202311080297.2, filed with the Chinese Patent Office on August 24, 2023, with the title "PFC TOTEM POLE CIRCUIT AND ZVS IMPLEMENTATION METHOD", the disclosure of which is hereby incorporated by reference in its entirety.

### TECHNICAL FIELD

The present application relates to the technical field of circuit control, particularly to a Power Factor Correction (PFC) totem pole circuit and a Zero Voltage Switch (ZVS) implementation method.

### BACKGROUND

A PFC totem pole circuit is a circuit that can convert alternating current (AC) into direct current (DC). Usually, a PFC totem pole circuit includes components such as an alternating-current power supply, an inductor, a capacitor, a main transistor, and a flyback diode. During the operation of the circuit, the main transistor and flyback diode can be alternately turned on, thereby converting the input AC power into DC power output.

The traditional bridge free totem pole PFC circuit has the problem of hard switching of the switch transistor and high switching losses. One solution to improve efficiency and reduce switching losses is to implement ZVS with switch transistors. However, in a traditional critical current mode, PFC control can only achieve valley voltage turn-on and cannot fully achieve zero voltage turn-on.

### SUMMARY

In the first aspect, a PFC totem pole circuit is provided, including an alternating-current power supply, an inductor, a first switch transistor, a second switch transistor, a third switch transistor, a fourth switch transistor, a current acquisition module, a voltage acquisition module, and a capacitor, wherein one side of the alternating-current power supply is connected to the first end of the first switch transistor and the first end of the second switch transistor, the other side of the alternating-current power supply is connected to the first end of the third switch transistor and the first end of the fourth switch transistor through the current acquisition module and the inductor, the second end of the third switch transistor is connected to the second end of the first switch transistor, and the second end of the fourth switch transistor is connected to the second end of the second switch transistor, the voltage acquisition module is connected in parallel with the inductor, and the capacitor is connected in parallel with the third switch transistor and the fourth switch transistor; the current acquisition module is configured to acquire an inductor current signal of the inductor, the voltage acquisition module is configured to acquire an inductor voltage signal of the inductor, the inductor current signal is used to control a flyback diode, and the inductor voltage signal is used to control a main transistor; wherein the third switch transistor is the main transistor and the fourth switch transistor is the flyback diode, or the fourth switch transistor is the main transistor and the third switch transistor is the flyback diode.

In the second aspect, a ZVS implementation method is provided, applied to the PFC totem pole circuit according to the first aspect, and including: acquiring an inductor current signal of an inductor by a current acquisition module; acquiring an inductor voltage signal of the inductor by a voltage acquisition module; and controlling a flyback diode according to the inductor current signal, and controlling a main transistor according to the inductor voltage signal.

In the third aspect, an electronic device is provided, which includes: a processor; a memory for storing executable instructions of the processor; wherein the processor is configured to execute the instructions to implement the method according to the second aspect.

In the fourth aspect, a computer-readable storage medium is provided, which when the instructions in the storage medium are executed by the processor of an electronic device, enables the electronic device to perform the method according to the second aspect.

### BRIEF DESCRIPTION OF DRAWINGS

In order to more clearly illustrate the technical solution of the embodiments of the present application or prior art, the accompanying drawings required for describing the embodiments will be briefly introduced below. Obviously, the accompanying drawings in the following description are some embodiments of the present application. For those skilled in the art, other accompanying drawings can also be obtained based on these drawings without exerting creative efforts.
Fig. 1 is a schematic diagram of the structure of a PFC totem pole circuit in some cases.
Fig. 2 is a schematic diagram of the structure of a PFC totem pole circuit according to an embodiment of the present application.
Fig. 3 is a schematic diagram of the structure of a PFC totem pole circuit according to an embodiment of the present application.
Fig. 4 is a schematic diagram of the structure of a PFC totem pole circuit according to an embodiment of the present application.
Fig. 5 is a flowchart of a ZVS implementation method according to an embodiment of the present application.
Fig. 6 is a schematic diagram of the structure of an electronic device according to an embodiment of the present application.
Fig. 7 is a schematic diagram of the structure of a ZVS implementation device according to an embodiment of the present application.

### DETAILED DESCRIPTION

In order to enable those skilled in the art to better understand the technical solution in the present application, a clear and complete description of the technical solution in the present application will be provided below in conjunction with the accompanying drawings in one or more embodiments of this application. Obviously, the described embodiments are only a part of the embodiments of the present application, not all of them. Based on the embodiments in the present application, all other embodiments obtained by those skilled in the art without creative labor should fall within the scope of protection of the present application.

The terms "first", "second", etc. used in the present application and claims are intended to distinguish similar objects and not to describe a specific order or sequence. It should be understood that the data used in this way may be interchangeable in appropriate circumstances, so that the present application can be implemented in a sequence other than those illustrated or described herein. In addition, in the present application and the claims, "and/or" represents at least one of the connected objects, and the character "/" generally indicates an "or" relationship between the related objects.

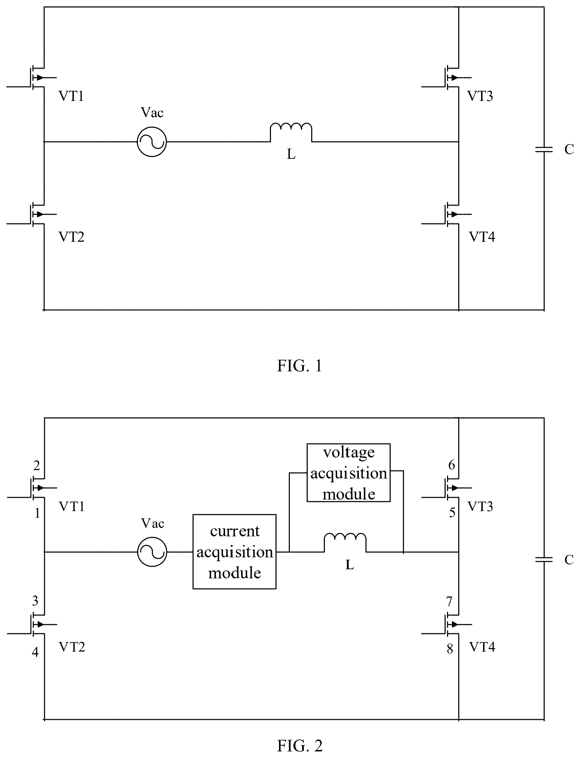

The traditional bridge free totem pole circuit has the problem of hard switching of switch transistor and high switching losses. As shown in Fig. 1. Fig. 1 is a schematic diagram of the structure of a PFC totem pole circuit in some cases. The totem pole circuit shown in Fig. 1 includes alternating-current power supply Vac, power frequency return transistors VT1 and VT2, an inductor L, main power transistors VT3 and VT4, and a BUS capacitor C. During the positive half cycle of the alternating-current power supply Vac, VT2 is turned on, VT1 is turned off, VT4 is the main transistor, and VT3 is the flyback diode; and during the negative half cycle of the alternating-current power supply Vac, VT1 is turned on, VT2 is turned off, VT3 is the main transistor, and VT4 is the flyback diode. Among them, whether during the positive or negative half cycle of the alternating-current power supply, VT3 and VT4 can be controlled to alternately turn on, and in the case of alternate turning on, the alternating-current power supply can be converted into direct current output.

In some cases, there is a problem of hard switching of VT3 and VT4 when the VT3 and VT4 are controlled to alternately turn on. However, in practical applications, due to the high operating frequency of the main transistor (during the positive half cycle of the alternating-current power supply, the main transistor is VT4, and during the negative half cycle of the alternating-current power supply, the main transistor is VT3), which can reach several hundred KHz, the switching loss of the main transistor is relatively large during hard switching. In order to reduce the switching losses of the main transistor, one solution is to achieve full range ZVS for the main transistor, which means that zero voltage switching of the main transistor can be achieved every time it is turned on. However, current control methods typically can only achieve partial ZVS within the scope of the main transistor, and cannot achieve full range ZVS.

The embodiment of the present application provides a PFC totem pole circuit and a ZVS implementation method. By adding a current acquisition module and a voltage acquisition module to the PFC totem pole circuit, the current acquisition module is used to acquire the inductor current signal of the inductor, and the voltage acquisition module is used to acquire the inductor voltage signal of the inductor. Then, the flyback diode is controlled according to the inductor current signal, and the main transistor is controlled according to the inductor voltage signal. Thus, precise control of the main transistor and the flyback diode can be achieved through the acquired signals, enabling full range ZVS of the switch transistors and effectively reducing switching losses.

It should be noted that the ZVS implementation method provided in the present embodiment can achieve the full range ZVS of the main transistor. In addition, due to the influence of the flyback diode on the full range ZVS of the main transistor, in the embodiment of present application, the flyback diode is controlled while the main transistor is controlled. That is, while the inductor voltage signal is acquired and the main transistor is controlled according to the inductor voltage signal, the inductor current signal is also acquired and the flyback diode is also controlled according to the inductor current signal. Therefore, precise control of the main transistor and flyback diode can be achieved through the acquired signals, thereby realizing the full range ZVS of the main transistor and effectively reducing switching losses.

The following provides a detailed explanation of the technical solutions provided by each embodiment of the present application, in conjunction with the accompanying drawings.

Fig. 2 is a schematic diagram of the structure of a PFC totem pole circuit according to an embodiment of the present application. The PFC totem pole circuit shown in Fig. 2 includes an alternating-current power supply Vac, an inductor L, a first switch transistor VT1, a second switch transistor VT2, a third switch transistor VT3, a fourth switch transistor VT4, a current acquisition module, a voltage acquisition module, and a capacitor C. The connection relationships of these components are as follows:
One side of the alternating-current power supply Vac (i.e., the left side of Vac shown in Fig. 2) is connected to the first end of the first switch transistor VT1 (i.e., the end 1 shown in Fig. 2) and the first end of the second switch transistor VT2 (i.e., the end 3 shown in Fig. 2), the other side of the alternating-current power supply Vac (i.e., the right side of Vac shown in Fig. 2) is connected to the first end of the third switch transistor VT3 (i.e., the end 5 shown in Fig. 2) and the first end of the fourth switch transistor VT4 (i.e., the end 7 shown in Fig. 2) through the current acquisition module and the inductor L, the second end of the third switch transistor VT3 (i.e., the end 6 shown in Fig. 2) is connected to the second end of the first switch transistor VT1 (i.e., the end 2 shown in Fig. 2), and the second end of the fourth switch transistor VT4 (i.e., the end 8 shown in Fig. 2) is connected to the second end of the second switch transistor VT2 (i.e., the end 4 shown in Fig. 2), the voltage acquisition module is connected in parallel with the inductor L, and the capacitor C is connected in parallel with the third switch transistor VT3 and the fourth switch transistor VT4. The current acquisition module is configured to acquire an inductor current signal of the inductor L, the voltage acquisition module is configured to acquire an inductor voltage signal of the inductor L, the inductor current signal is used to control a flyback diode, and the inductor voltage signal is used to control a main transistor. Where the third switch transistor VT3 is the main transistor and the fourth switch transistor VT4 is the flyback diode, or the fourth switch transistor VT4 is the main transistor and the third switch transistor VT3 is the flyback diode.

The first switch transistor VT1 and the second switch transistor VT2 can be power frequency return transistors, while the third switch transistor VT3 and the fourth switch transistor VT4 are main power transistors. During the operation of the PFC totem pole circuit, the third switch transistor VT3 and the fourth switch transistor VT4 are alternately turned on. In some cases, during the positive half cycle of the alternating-current power supply Vac, the second switch transistor VT2 is turned on, the first switch transistor VT1 is turned off, at this time, the fourth switch transistor VT4 is the main transistor, and the third switch transistor VT3 is the flyback diode, the inductor current signal controls the third switch transistor VT3, and the inductor voltage signal controls the fourth switch transistor VT4, so that the third switch transistor VT3 and the fourth switch transistor VT4 are alternately turned on. During the negative half cycle of the alternating-current power supply Vac, the first switch transistor VT1 is turned on, the second switch transistor VT2 is turned off, at this time, the third switch transistor VT3 is the main transistor, and the fourth switch transistor VT4 is the flyback diode, the inductor current signal controls the fourth switch transistor VT4, and the inductor voltage signal controls the third switch transistor VT3, so that the third switch transistor VT3 and the fourth switch transistor VT4 are alternately turned on. When the third switch transistor VT3 and the fourth switch transistor VT4 are alternately turned on, the alternating-current power supply Vac can be converted into direct current output, that is, direct current can be output at the two ends of the capacitor C.

The embodiment of the present application provides the PFC totem pole circuit, by adding the current acquisition module and the voltage acquisition module, and the current acquisition module is used to acquire the inductor current signal of the inductor, and the voltage acquisition module is used to acquire the inductor voltage signal of the inductor. Then, the flyback diode is controlled according to the inductor current signal, and the main transistor is controlled according to the inductor voltage signal. Thus, precise control of the main transistor and the flyback diode can be achieved through the acquired signals, enabling full range ZVS and effectively reducing switching losses while precisely controlling the main transistor and the flyback diode. Where the full range ZVS here refers to the full range ZVS for main transistors.

Optionally, in one implementation, the current acquisition module may include a shunt and a first signal sampling circuit, the shunt is connected in series with the inductor, and the first signal sampling circuit is connected in parallel with the shunt. The shunt can be a resistor, and the resistance value thereof can be set according to actual needs. The first signal sampling circuit can be used to acquire the voltage between the two ends of the shunt. This voltage can be processed by the first signal sampling circuit to obtain the inductor current signal, or by other modules to obtain the inductor current signal. In other possible implementations, the current acquisition module can also be of other structures, as long as it can achieve the acquisition of inductor current signals. Here, we will not provide examples of other structures one by one.

Optionally, in one implementation, the voltage acquisition module may include an auxiliary winding and a second signal sampling circuit, the auxiliary winding is coupled to the inductor, and the second signal sampling circuit is connected in parallel with the auxiliary winding. The winding direction of the auxiliary winding can be the same or different from that of the inductor, and the auxiliary winding can reflect the voltage situation of the inductor. The second signal sampling circuit can be used to acquire two voltages corresponding to the two endpoints of the auxiliary winding. These two voltages can be processed by the second signal sampling circuit to obtain the inductor voltage signal, or by other modules to obtain the inductor voltage signal. In other possible implementations, the voltage acquisition module can also be of other structures, as long as it can achieve the acquisition of inductor voltage signals. Here, we will not provide examples of other structures one by one.

Optionally, the PFC totem pole circuit provided in the embodiment of present application may further include a driving module, the input end of the driving module can be connected to the output end of the current acquisition module and the output end of the voltage acquisition module, and the output end of the driving module can be connected to the control end of the third switch transistor and the control end of the fourth switch transistor. Where the driving module can be used to control the flyback diode according to the inductor current signal, and to control the main transistor according to the inductor voltage signal. That is, during the positive half cycle of the alternating-current power supply, the driving module can be used to control the third switch transistor as the flyback diode according to the inductor current signal, and to control the fourth switch transistor as the main transistor according to the inductor voltage signal; and during the negative half cycle of the alternating-current power supply, the driving module can be used to control the fourth switch transistor as the flyback diode according to the inductor current signal, and to control the third switch transistor as the main transistor according to the inductor voltage signal.

In one implementation, if the signals output by both the current acquisition module and the voltage acquisition module are voltage signals, the driving module may include a processor and a driving circuit. The processor is used to process the voltage signal output by the current acquisition module to obtain the inductor current signal, and to process the voltage signal output by the voltage acquisition module to obtain the inductor voltage signal. Based on the inductor current signal and the inductor voltage signal, and whether to send a driving signal to the driving circuit is determined. The driving circuit is used to control the main transistor and the flyback diode according to the driving signal sent by the processor, such as controlling when the main transistor is turned on and when the flyback diode is turned off according to the driving signal. In another implementation, if the signal output by the current acquisition module is an inductor current signal and the signal output by the voltage acquisition module is an inductor voltage signal, the driving module may also include a processor and a driving circuit. The processor is used to receive the inductor current signal and the inductor voltage signal, and determine whether to send a driving signal to the driving circuit according to the received inductor current signal and inductor voltage signal. The driving circuit is used to control the main transistor and the flyback diode according to the driving signal sent by the processor, such as controlling when the main transistor is turned on and when the flyback diode is turned off according to the driving signal.

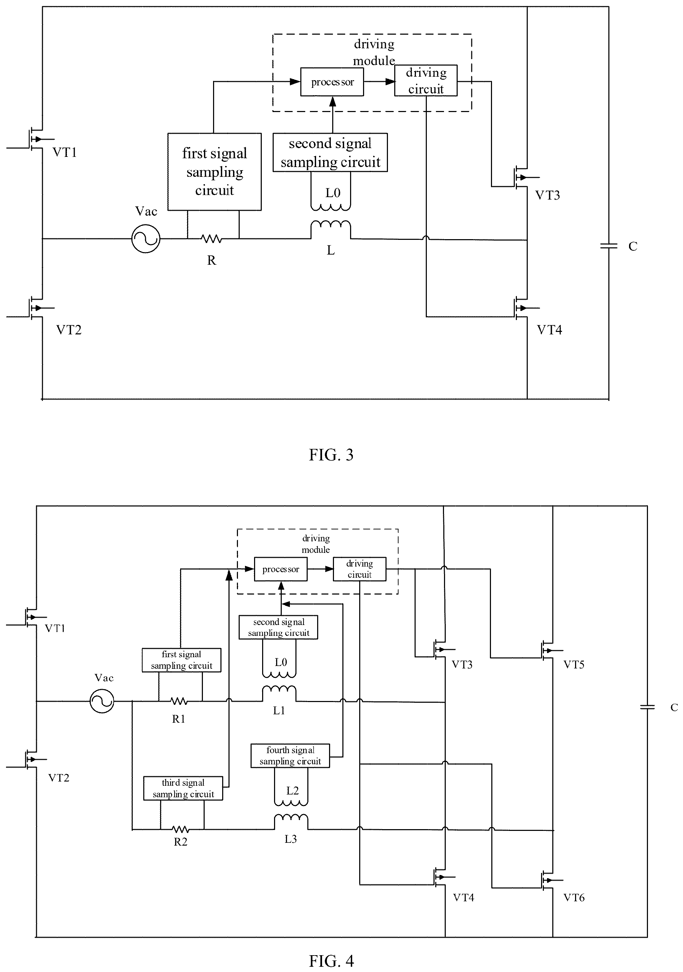

Fig. 3 is a schematic diagram of the structure of a PFC totem pole circuit according to an embodiment of the present application. As shown in Fig. 3, the PFC totem pole circuit includes an alternating-current power supply Vac, four switching transistors VT1, VT2, VT3, and VT4, a capacitor C, a resistor R, an inductor L, an auxiliary winding L0, a first signal sampling circuit, a second signal sampling circuit, a processor, and a driving circuit. One side of the alternating-current power supply Vac is connected to the midpoint of VT1 and VT2, while the other side is connected to the midpoint of VT3 and VT4 through resistor R and inductor L. The capacitor C is connected in parallel with VT3 and VT4. The first signal sampling circuit is connected in parallel with resistor R. The first signal sampling circuit is used to acquire the voltage between the two ends of the resistor R and output the voltage to the processor, and the processor process the voltage to obtain the inductor current signal. The auxiliary winding L0 is coupled to the inductor L. The second signal sampling circuit is connected in parallel with the auxiliary winding L0. The second signal sampling circuit is used to acquire two voltages at the two endpoints of the auxiliary winding and output them to the processor, and the processor processes the voltages to obtain the inductor voltage signal. The input end of the driving circuit is connected to the output end of the processor, and the output end of the driving circuit is connected to the control ends of VT3 and VT4. During the positive half cycle of Vac, the driving circuit is used to control VT3 according to the inductor current signal, and to control VT4 according to the inductor voltage signal. During the negative half cycle of Vac, the driving circuit is used to control VT4 according to the inductor current signal, and to control VT3 according to the inductor voltage signal.

Optionally, if the first signal sampling circuit shown in Fig. 3 can process the acquired voltage signal and obtain the inductor current signal, and the second signal sampling circuit can process the acquired voltage signal and obtain the inductor voltage signal, then the PFC totem pole circuit shown in Fig. 3 may not include a processor, that is, the output ends of the first signal sampling circuit and the second signal sampling circuit can be directly connected to the input end of the driving circuit.

In the embodiment of present application, the PFC totem pole circuits shown in Figs. 2 and 3 are both single-phase circuits. In one possible implementation, the PFC totem pole circuit can also be a multi-phase circuit, each phase circuit can include an inductor, a current acquisition module, a voltage acquisition module, a third switch transistor, and a fourth switch transistor, and the circuit structure of each phase circuit is the same. A multi-phase PFC totem pole circuit can achieve high power, thereby meeting the demand for high power. Where in order to reduce the ripple of the output direct current, there may be a certain phase difference between the driving signals of the multi-phase circuit. Optionally, the phase difference between the driving signal of the Nth phase circuit and the driving signal of the (N-1)th phase circuit is 2 π/N, the driving signal includes the inductor current signal and the inductor voltage signal, and N is an integer greater than 1. For example, when N=2, the two phases are interleaved, and the structure of the second phase circuit is the same as that of the first phase circuit. The phase of the driving signal of the second phase circuit lags behind that of the first phase circuit by 2 * π/2=180 °; When N=3, the three phases are interleaved, and the phase of the driving signal of the second phase circuit lags behind the driving signal of the first phase circuit by 2 * π/3=120 °, the phase of the driving signal of the third phase circuit lags behind the driving signal of the second phase circuit by 2 * π/3=120 °, and lags behind the driving signal of the first phase circuit by 2 * 2 * π/N=240 °; when N ≥ 4, and so on.

For the convenience of understanding the multi-phase PFC totem pole circuit, please refer to Fig. 4. Fig. 4 is a schematic diagram of the structure of a PFC totem pole circuit according to an embodiment of the present application. The PFC totem pole circuit shown in Fig. 4 is a two-phase circuit. The first phase circuit includes a resistor R1, a first signal sampling circuit, an inductor L1, an auxiliary winding L0, a second signal sampling circuit, and switch transistors VT3 and VT4. The second phase circuit includes a resistor R2, a third signal sampling circuit, an inductor L3, an auxiliary winding L2, a fourth signal sampling circuit, and switch transistors VT5 and VT6. A processor, a driving circuit, switch transistors VT1 and VT2, an alternating-current power supply Vac, and a capacitor C are common components of the first and second phase circuits. In Fig. 4, the phase of the driving signal of the first phase circuit lags behind that of the driving signal of the second phase circuit by 180 °.

The PFC totem pole circuit provided in the embodiment of present application, by adding a current acquisition module and a voltage acquisition module to the circuit, the current acquisition module is used to acquire the inductor current signal of the inductor, and the voltage acquisition module is used to acquire the inductor voltage signal of the inductor. Then, the flyback diode is controlled according to the inductor current signal, and the main transistor is controlled according to the inductor voltage signal, thus, precise control of the main transistor and the flyback diode can be achieved, enabling full range ZVS and effectively reducing switching losses. In addition, since each phase circuit can be equipped with a set of current acquisition module and voltage acquisition module to acquire inductor voltage and inductor current, it can reduce circuit components and save costs.

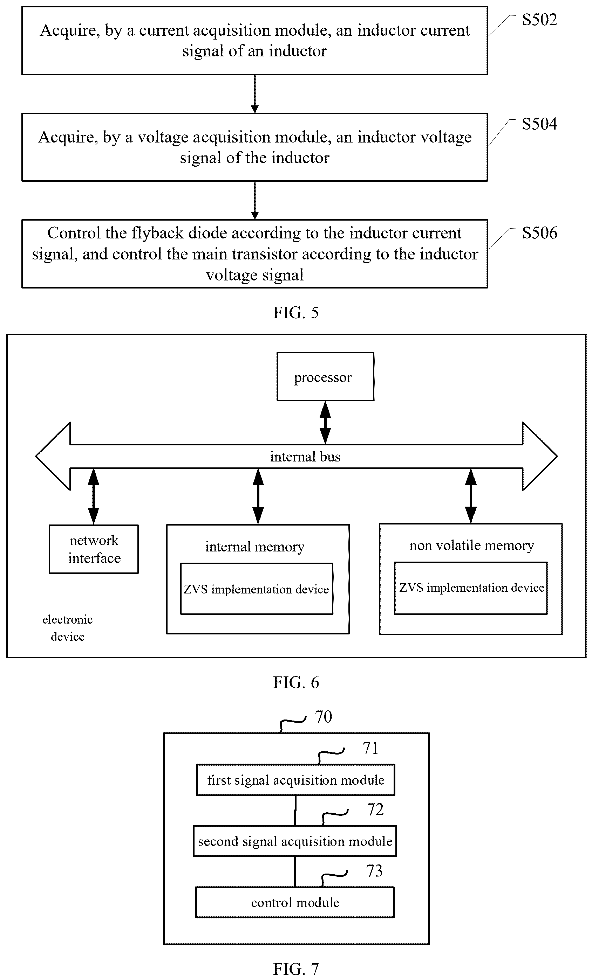

On the basis of the PFC totem pole circuit provided in the embodiment of present application, the embodiment of present application further provides a ZVS implementation method applied to the PFC totem pole circuit, based on which a full range of ZVS can be achieved. Please refer to Fig. 5 for details.

Fig. 5 is a flowchart of a ZVS implementation method according to an embodiment of the present application. The ZVS implementation method shown in Fig. 5 can be applied to any PFC totem pole circuit shown in Figs. 2 to 4. The ZVS implementation method shown in Fig. 5 is as follows.

At S502: A current acquisition module acquires an inductor current signal of an inductor.

During the operation of the PFC totem pole circuit, the inductor current signal of the inductor in the circuit can be acquired by the current acquisition module in the circuit.

In one implementation, the current acquisition module may include a shunt and a first signal sampling circuit, the shunt is connected in series with the inductor, and the first signal sampling circuit is connected in parallel with the shunt. Acquiring the inductor current signal of the inductor by the current acquisition module may include that: the first signal sampling circuit acquires the first voltage between the two ends of the shunt; and processing the first voltage to obtain the inductor current signal.

Due to the series connection between the shunt and the inductor, the voltage between the two ends of the shunt can indirectly reflect the current flowing through the inductor. Therefore, the first voltage between the two ends of the shunt can be acquired by the first signal sampling circuit, and the inductor current signal can be obtained by processing the first voltage.

There are two ways to process the first voltage to obtain the inductor current signal. The first way is, comparing the first voltage with a preset second voltage, and determining the inductor current signal according to the comparison result. The second way is, determining the current signal flowing through the shunt (that is, the instantaneous value of the current flowing through the inductor) according to the first voltage and the resistance value of the shunt, and determining the current signal as the inductor current signal. In the first way, the inductor current signal is a pulse-width modulation (PWM) signal, which can include a high-level signal, a low-level signal, a rising edge signal, and a falling edge signal. When the first voltage is greater than the second voltage, the inductor current signal is a high-level signal. When the first voltage is less than the second voltage, the inductor current signal is a low-level signal. When the low-level signal switches to the high-level signal, the inductor current signal is a rising edge signal, indicating that the inductor current is at a sudden change time point where it abruptly changes from a low level where the first voltage is less than the second voltage to a high level where the first voltage is greater than the second voltage. When the high-level signal switches to the low-level signal, the inductor current signal is a falling edge signal, indicating that the inductor current is at a sudden change time point where it abruptly changes from a high level where the first voltage is greater than the second voltage to a low level where the first voltage is less than the second voltage. The second voltage can be set according to the actual situation, as long as it can achieve full range ZVS turn-on for the main transistor when controlling the flyback diode according to the inductor current signal. For example, the second voltage can be the voltage between the two ends of the shunt when the main transistor achieves ZVS turn-on.

At S504: the voltage acquisition module acquires an inductor voltage signal of the inductor.

During the operation of the PFC totem pole circuit, the inductor voltage signal of the inductor in the circuit can be acquired by the voltage acquisition module in the circuit.

In one implementation, the voltage acquisition module may include an auxiliary winding and a second signal sampling circuit, the auxiliary winding is coupled with the inductor, and the second signal sampling circuit is connected in parallel with the auxiliary winding. Acquiring the inductor voltage signal of the inductor by the voltage acquisition module may include that: the second signal sampling circuit acquires the third voltage and fourth voltage at two ends of the auxiliary winding; and the third voltage is compared with the fourth voltage and the inductor voltage signal is determined according to the comparison result.

Due to the coupling connection between the auxiliary winding and the inductor, the voltage at both ends of the auxiliary winding can reflect the voltage between the two ends of the inductor. Therefore, the voltage at both ends of the auxiliary winding, namely the third voltage and the fourth voltage, can be acquired by the second signal sampling circuit, and then the inductor voltage signal can be obtained by comparing the third voltage with the fourth voltage. Where the inductor voltage signal is PWM signal. When the third voltage is greater than the fourth voltage, the inductor voltage signal is a high-level signal. When the third voltage is less than the fourth voltage, the inductor voltage signal is a low-level signal. When the low-level signal switches to the high-level signal, the inductor voltage signal is a rising edge signal, indicating that the inductor voltage is at a sudden change time point where it abruptly changes from a falling state to a rising state. When the high-level signal switches to the low-level signal, the inductor voltage signal is a falling edge signal, indicating that the inductor voltage is at a sudden change time point where it abruptly changes from a rising state to a falling state.

At S506: a flyback diode is controlled according to the inductor current signal, and a main transistor is controlled according to the inductor voltage signal.

After acquiring the inductor voltage signal and inductor current signal, the flyback diode in the circuit can be controlled according to the inductor current signal, and the main transistor in the circuit can be controlled according to the inductor voltage signal. For example, in the PFC totem pole circuit shown in Figs. 2 and 3, during the positive half cycle of the alternating-current power supply Vac, VT3 can be controlled according to the inductor current signal, and VT4 can be controlled according to the inductor voltage signal; and during the negative half cycle of the alternating-current power supply Vac, VT4 can be controlled according to the inductor current signal, and VT3 can be controlled according to the inductor voltage signal.

In one implementation, controlling the flyback diode according to the inductor current signal, and controlling the main transistor according to the inductor voltage signal may include that: when the flyback diode is turned off, the main transistor is controlled to turn on according to the inductor voltage signal; when the main transistor is turned off, the flyback diode is turned on according to the preset dead time; or when the flyback diode is turned on, the flyback diode is controlled to turn off according to the inductor current signal.

In the embodiment of present application, in the initial stages of the positive and negative half cycles of the alternating-current power supply, both the flyback diode and the main transistor are in the default turned off (i.e. cut-off) state. Afterwards, the flyback diode and the main transistor can be controlled according to the inductor current signal and inductor voltage signal respectively, so that the main transistor and the flyback diode are turn on to alternately and sequentially. In some cases, taking the positive half cycle of the alternating-current power supply as an example, when both the main transistor and flyback diode are turned off, the main transistor can be turned on first. When the main transistor is turned on, the main transistor can be controlled to turn on according to the inductor voltage signal. Afterwards, the main transistor can be controlled to be turned off. When the main transistor is turned off, the flyback diode can be controlled to be turned on. When the flyback diode is turned on, it can be turned on according to the preset dead time, that is, when the time to turn off the main transistor reaches the dead time, the flyback diode can be controlled to be turned on. After turning on the flyback diode, the flyback diode can be turned off. When turning off the flyback diode, it can be controlled according to the inductor current signal. In the case of turning off the flyback diode, the main transistor can be controlled to turn on according to the inductor voltage signal, and so on. In this cycle, the main transistor and the flyback diode can be alternately controlled to turn on during the positive half cycle of the alternating-current power supply by means of the inductor voltage signal and inductor current signal. During the negative half cycle of the alternating-current power supply, the turning on and turning off for the main transistor and flyback diode can be controlled in the same way. In this way, due to the precise control of when the main transistor is turned on according to the acquired inductor voltage signal, and when the flyback diode is turned off according to the acquired inductor current signal, the full range ZVS of the main transistor during the positive and negative half cycles of the alternating-current power supply can be achieved.

In the above control method, controlling the main transistor to turn on according to the inductor voltage signal, may include that: the turn-on time of the main transistor is determined; and the main transistor is turned off when the turn-on time is reached.

When determining the turn-on time of the main transistor, the turn-on time of the main transistor can be determined according to a circuit parameter of the PFC totem pole circuit. The circuit parameter may include at least one of an input voltage, a BUS voltage, an inductance, and a phase-locked loop of the PFC totem pole circuit. When determining the turn-on time of the main transistor according to these circuit parameters, the specific implementation can refer to the specific implementation in related technologies, which will not be explained in detail here.

After determining the turn-on time of the main transistor, the main transistor can be controlled to turn off when the time of turning on reaches the turn-on time.

As mentioned above, the inductor voltage signal may include a high-level signal, a low-level signal, a rising edge signal, and a falling edge signal. In the above control method, there can be two control ways when controlling the main transistor to turn on according to the inductor voltage signal. The first control way is to control the main transistor to turn on according to the high-level signal and the low-level signal. The second control way is to control the main transistor to turn on according to the rising edge signal and the falling edge signal. The specific control way used to control the turning on of the main transistor can be determined based on the actual circuit design, and there is no specific limitation here.

Controlling the main transistor to be turned on according to the high-level signal and low-level signal in the inductor voltage signal may include that during the positive half cycle of the alternating-current power supply, when the inductor voltage signal is detected as a high-level signal, the main transistor is controlled to be turned on, and during the negative half cycle of the alternating-current power supply, when the inductor voltage signal is detected as a low-level signal, the main transistor is controlled to be turned on. Alternatively, during the positive half cycle of the alternating-current power supply, when the inductor voltage signal is detected as a low-level signal, the main transistor is controlled to be turned on, and during the negative half cycle of the alternating-current power supply, when the inductor voltage signal is detected as a high-level signal, the main transistor is controlled to be turned on. This can be determined according to the circuit design of the voltage acquisition module in the PFC totem pole circuit, such as whether the winding direction of the auxiliary winding is consistent with that of the inductor.

Controlling the main transistor to be turned on according to the rising edge signal and falling edge signal in the inductor voltage signal may include that during the positive half cycle of the alternating-current power supply, when the inductor voltage signal is detected as a rising edge signal, the main transistor is controlled to be turned on, and during the negative half cycle of the alternating-current power supply, when the inductor voltage signal is detected as a falling edge signal, the main transistor is controlled to be turned on. Alternatively, during the positive half cycle of the alternating-current power supply, when the inductor voltage signal is detected as a falling edge signal, the main transistor is controlled to be turned on, and during the negative half cycle of the alternating-current power supply, when the inductor voltage signal is detected as a rising edge signal, the main transistor is controlled to be turned on. This can be determined according to the circuit design of the voltage acquisition module in the PFC totem pole circuit, such as whether the winding direction of the auxiliary winding is consistent with that of the inductor.

As mentioned above, the inductor current signal may include a high-level signal, a low-level signal, a rising edge signal, and a falling edge signal, or the inductor current signal is a current signal. In the above control method, there can be three control ways when controlling the flyback diode to turn off according to the inductor current signal. The first control way is to control the flyback diode to turn off according to the high-level signal and the low-level signal in the inductor current signal, the second control way is to control the flyback diode to turn off according to the rising edge signal and the falling edge signal in the inductor current signal, the third control way is to control the flyback diode to turn off when the current signal reaches the preset current value. Where when the inductor circuit signal includes a high-level signal, a low-level signal, a rising edge signal, and a falling edge signal, whether to use the first control way or the second control way to control the main transistor to turn on can be determined according to the actual circuit design, and there is no specific limitation here.

Controlling the flyback diode to turn off according to the high-level and low-level signals in the inductor current signal may include that during the positive half cycle of the alternating-current power supply, when the inductor current signal is detected as a high-level signal, the flyback diode is controlled to turn off, and during the negative half cycle of the alternating-current power supply, when the inductor current signal is detected as a low-level signal, the flyback diode is controlled to turn off. Alternatively, during the positive half cycle of the alternating-current power supply, when the inductor current signal is detected as a low-level signal, the flyback diode is controlled to turn off, and during the negative half cycle of the alternating-current power supply, when the inductor current signal is detected as a high-level signal, the flyback diode is controlled to turn off. This can be determined according to the circuit design of the current acquisition module in the PFC totem pole circuit. For example, it can be determined whether to subtract the second voltage from the first voltage or subtract the first voltage from the second voltage when comparing the acquired first voltage with the preset second voltage. It should be noted that the value of the preset second voltage here is not fixed and can vary according to the actual working conditions of the prototype, such as the positive and negative half cycles of the alternating-current power supply, input voltage, output power, Bus voltage, etc.

Controlling the flyback diode to turn off according to the rising and falling edge signals in the inductor current signal may include that during the positive half of the alternating-current power supply, when the inductor current signal is detected as a rising edge signal, the flyback diode is controlled to turn off, and during the negative half of the alternating-current power supply, when the inductor current signal is detected as a falling edge signal, the flyback diode is controlled to turn off. Alternatively, during the positive half cycle of the alternating-current power supply, when the inductor current signal is detected as a falling edge signal, the flyback diode is controlled to turn off, and during the negative half cycle of the alternating-current power supply, when the inductor current signal is detected as a rising edge signal, the flyback diode is controlled to turn off. This can be determined according to the circuit design of the current acquisition module in the PFC totem pole circuit. For example, it can be determined whether to subtract the second voltage from the first voltage or subtract the first voltage from the second voltage when comparing the acquired first voltage with the preset second voltage. It should be noted that the value of the preset second voltage here is not fixed and can vary according to the actual working conditions of the prototype, such as the positive and negative half cycles of the alternating-current power supply, input voltage, output power, Bus voltage, etc.

Controlling the flyback diode to turn off according to the current signal may include that the flyback diode is controlled to turn off when the current signal reaches the preset current value. The preset current value can be the current value flowing through the inductor that can achieve full range ZVS for the main transistor.

The principle by which the embodiment of present application can achieve full range ZVS for the main transistor by controlling the turn-on of the main transistor according to the inductor voltage signal and controlling the turn-off of the flyback diode according the inductor current signal is as follows.

The inductor voltage signal can characterize the voltage between the two ends of the inductor. When the inductor voltage signal is a high-level or low-level signal, the main transistor is controlled to turn on, or when the inductor voltage signal is a rising or falling edge signals, the main transistor is controlled to turn on, such that the main transistor is controlled to turn on when the voltage between the two ends of the inductor reverses, and the voltage between the two ends of the main transistor is 0, thus achieving ZVS of the main transistor. The inductor current signal can characterize the current flowing through the inductor. When the inductor current signal is a high-level signal or a low-level signal, the flyback diode is controlled to turn off, or, when the inductor current signal is a rising edge signal or a falling edge signal, the flyback diode is controlled to turn off, or when the current signal reaches the preset current value, the flyback diode is controlled to turn off; such that the current flowing through the inductor can reach the preset value. At this time, the resonance effect of the inductor and capacitor in the circuit can resonate the voltage at both ends of the main transistor to 0, thereby achieving ZVS of the main transistor.

In order to facilitate the understanding of the ZVS implementation method provided in the embodiment of the present application, the following will take the PFC totem pole circuit shown in Fig. 3 as an example to explain in detail the control flow of the main transistor and the flyback diode.

In the PFC totem pole circuit shown in Fig. 3, when the alternating-current power supply Vac is in the positive half cycle, VT2 is turned on, VT1 is turned off, VT4 is the main transistor, and VT3 is the flyback diode. When the alternating-current power supply Vac is in the negative half cycle, VT1 is turned on, VT2 is turned off, VT3 is the main transistor, and VT4 is the flyback diode.

In the initial stage of the positive half cycle of the alternating-current power supply Vac, the driving circuit controls the main transistor VT4 and the flyback diode VT3 to be turned off, that is, the main transistor VT4 and the flyback diode VT3 are in the turned off state by default. Afterwards, the control process of controlling the main transistor VT4 and the flyback diode VT3 is as follows.

At Step 1: A processor receives a voltage signal output from a second signal sampling circuit, determines an inductor voltage signal according to the voltage signal, and outputs the inductor voltage signal to a driving circuit. The driving circuit controls the main transistor VT4 to turn on according to the inductor voltage signal.

At Step 2: The processor calculates the turn-on time T1 of the main transistor VT4 according to the input voltage (Vac), BUS voltage (i.e. the voltage between the two ends of the capacitor shown in Fig. 3), inductance (inductance of inductor L), phase-locked loop, and other information, and outputs T1 to the driving circuit.

At Step 3: After the turn-on time of the main transistor VT4 reaches T1, the driving circuit controls the main transistor VT4 to turn off.

At Step 4: The driving circuit controls the flyback diode VT3 to turn on according to the pre-set dead time. That is, after controlling the main transistor VT4 to turn off, the driving circuit controls the flyback diode VT3 to turn on when the turn-off time reaches the preset dead time.

At Step 5: The processor receives a voltage signal output from a first signal sampling circuit, determines an inductor current signal according to the voltage signal, and outputs the inductor current signal to the driving circuit. The driving circuit controls the flyback diode VT3 to turn off according to the inductor current signal.

At Step 6: After controlling the turning off of the flyback diode VT3, the driving circuit can return to perform the Step 1, that is, to control the main transistor VT4 to turn on according to the inductor voltage signal.

During the positive half cycle of the alternating-current power supply Vac, by cycling through Steps 1 to 6, VT3 and VT4 can be alternately turned on. With VT3 and VT4 alternately turned on, the alternating-current power supply can be converted into direct current output.

In the initial stage of the negative half cycle of the alternating-current power supply Vac, the driving circuit controls the main transistor VT3 and the flyback diode VT4 to turn off, that is, the main transistor VT3 and the flyback diode VT4 are in the turned off state by default. Afterwards, the control process of controlling the main transistor VT3 and the flyback diode VT4 is as follows.

At Step 7: The processor receives the voltage signal output from the second signal sampling circuit, determines the inductor voltage signal according to the voltage signal, and outputs the inductor voltage signal to the driving circuit. The driving circuit controls the main transistor VT3 to turn on according to the inductor voltage signal.

At Step 8: The processor calculates the turn-on time T2 of the main transistor VT3 according to the input voltage (Vac), BUS voltage (i.e. the voltage between the two ends of the capacitor shown in Fig. 3), inductance (inductance of inductor L), phase-locked loop, and other information, and outputs T2 to the driving circuit.

At Step 9: After the turn-on time of the main transistor VT3 reaches T2, the driving circuit controls the main transistor VT3 to turn off.

At Step 10: The driving circuit controls the flyback diode VT4 to turn on according to the pre-set dead time. That is, after controlling the main transistor VT3 to turn off, the driving circuit controls the flyback diode VT4 to turn on when the turn-off time reaches the preset dead time.

At Step 11: The processor receives the voltage signal output from the first signal sampling circuit, determines the inductor current signal according to the voltage signal, and outputs the inductor current signal to the driving circuit. The driving circuit controls the flyback diode VT4 to turn off according to the inductor current signal.

At Step 12: After controlling the flyback diode VT4 to turn off, the driving circuit returns to perform the Step 7, that is, to control the main transistor VT3 to turn on according to the inductor voltage signal.

During the negative half cycle of the alternating-current power supply Vac, by cycling through Steps 7 to 12, VT3 and VT4 can be alternately turned on. With VT3 and VT4 alternately turned on, the alternating-current power supply can be converted into direct current output.

Based on the above control process, due to the precise control of when the main transistor is turned on according to the acquired inductor voltage signal and when the flyback diode is turned off according to the acquired inductor current signal during the positive and negative half cycles of the alternating-current power supply Vac, full range ZVS of the main transistor during the positive and negative half cycles of the alternating-current power supply can be achieved, effectively reducing switching losses.

Based on the technical solutions provided in the embodiment of present application, by adding the current acquisition module and the voltage acquisition module to the PFC totem pole circuit, and the current acquisition module is used to acquire the inductor current signal of the inductor, and the voltage acquisition module is used to acquire the inductor voltage signal of the inductor. Then, the flyback diode is controlled according to the inductor current signal, and the main transistor is controlled according to the inductor voltage signal. Thus, precise control of the main transistor and the flyback diode can be achieved through the acquired signals, enabling full range ZVS and effectively reducing switching losses while precisely controlling the main transistor and the flyback diode.

The specific embodiments of the present application have been described above. Other embodiments are within the scope of the appended claims. In some cases, the actions or steps described in the claims may be performed in a different order than in the embodiments and still achieve the desired results. In addition, the process depicted in the figures does not necessarily require a specific or continuous order to achieve the desired results. In some implementations, multitasking and parallel processing are also possible or may be advantageous.

Fig. 6 is a schematic diagram of the structure of an electronic device according to an embodiment of the present application. Please refer to Fig. 6. At the hardware level, the electronic device includes a processor, and optionally also includes an internal bus, network interface, and inter memory. Wherein the memory may include inter memory, such as highspeed random access memory (RAM), and may also include non-volatile memory, such as at least one disk storage. Of course, the electronic device may also include hardware required for other businesses.

The processor, network interface, and memory can be interconnected through an internal bus, which can be an ISA (Industry Standard Architecture) bus, PCI (Peripheral Component Interconnect) bus, or EISA (Extended Industry Standard Architecture) bus. The bus can be divided into address bus, data bus, control bus, etc. For ease of representation, only one bidirectional arrow is used in Fig. 6, but it does not indicate that there is only one bus or one type of bus.

The memory is used to store programs. In some cases, the program may include program code, which includes computer operation instructions. Memory can include both inter memory and non-volatile memory, and provide instructions and data to the processor.

The processor reads the corresponding computer program from non-volatile memory into inter memory and runs it, forming a ZVS implementation device at the logical level. A processor that executes programs stored in memory and is specifically used to perform the following operations that: a current acquisition module acquires an inductor current signal of an inductor; a voltage acquisition module acquires an inductor voltage signal of the inductor; and controlling a flyback diode according to the inductor current signal, and controlling a main transistor according to the inductor voltage signal.

The method for executing the ZVS implementation device disclosed in the embodiment shown in Fig. 6 of the present application can be applied to a processor or implemented by a processor. The processor may be an integrated circuit chip with signal processing capabilities. In the implementation process, each step of the above method can be completed through hardware integrated logic circuits or software instructions in the processor. The above-mentioned processor can be a general-purpose processor, including a Central Processing Unit (CPU), a Network Processor (NP), etc.; and the processor can also be a Digital Signal Processor (DSP), Application Specific Integrated Circuit (ASIC), Field Programmable Gate Array (FPGA), or other programmable logic devices, discrete gates or transistor logic devices, or discrete hardware components. The methods, steps, and logical diagrams disclosed in the present application can be implemented or executed. A general-purpose processor can be a microprocessor or any conventional processor. The steps of the method disclosed in the present application can be directly reflected as being executed by a hardware decoding processor, or executed by a combination of hardware and software modules in the decoding processor. Software modules can be located in mature storage medium in this field, such as random access memory, flash memory, read-only memory, programmable read-only memory, or electrically erasable programmable memory, registers, etc. The storage medium is located in the memory, and the processor reads the information from the memory and completes the steps of the above method in conjunction with its hardware.

The electronic device can also execute the method of Fig. 5 and implement the functions of the ZVS implementation device in the embodiment shown in Fig. 5, which will not be repeated in the present application.

In addition to software implementation, the electronic device of the present application does not exclude other implementation methods, such as logic devices or a combination of software and hardware. That is to say, the executing subject of the following processing flow is not limited to each logic unit, but can also be hardware or logic devices.

The present application also proposes a computer-readable storage medium that stores one or more programs, the one or more programs including instructions that, when executed by a portable electronic device including multiple application programs, enable the portable electronic device to perform the method of the embodiment shown in Fig. 5, and specifically for performing the following operations: a current acquisition module acquires an inductor current signal of an inductor; a voltage acquisition module acquires an inductor voltage signal of the inductor; and controlling a flyback diode according to the inductor current signal, and controlling a main transistor according to the inductor voltage signal.

Fig. 7 is a schematic diagram of the structure of a ZVS implementation device according to an embodiment of the present application. Please refer to Fig. 7. In a software implementation, the ZVS implementation device 70 may include a first signal acquisition module 71, a second signal acquisition module 72, and a control module 73, wherein:
The first signal acquisition module 71 acquires an inductor current signal of an inductor by a current acquisition module; the second signal acquisition module 72 acquires an inductor voltage signal of the inductor by a voltage acquisition module; and the control module 73 controls the flyback diode according to the inductor current signal and controls the main transistor according to the inductor voltage signal.

Optionally, the current acquisition module includes a shunt and a first signal sampling circuit, the shunt is connected in series with the inductor, and the first signal sampling circuit is connected in parallel with the shunt; wherein that the first signal acquisition module 71 acquires the inductor current signal of the inductor by the current acquisition module, includes: acquiring the first voltage between the ends of the shunt by the first signal sampling circuit; and processing the first voltage to obtain the inductor current signal.

Optionally, that the first signal sampling module 71 processes the first voltage to obtain the inductor current signal, includes: comparing the first voltage with a preset second voltage and determining the inductor current signal according to a comparison result; or, determining a current signal flowing through the shunt according to the first voltage and the resistance value of the shunt, and determining the current signal as the inductor current signal.

Optionally, the voltage acquisition module includes an auxiliary winding and a second signal sampling circuit, the auxiliary winding is coupled to the inductor, and the second signal sampling circuit is connected in parallel with the auxiliary winding; wherein that the second signal acquisition module 71 acquires the inductor voltage signal of the inductor by the voltage acquisition module, includes: acquiring the third voltage and fourth voltage between the two ends of the auxiliary winding by the second signal sampling circuit; and comparing the third voltage with the fourth voltage, and determining the inductor voltage signal according to the comparison result.

Optionally, that the control module 73 controls the flyback diode according to the inductor current signal, and controls the main transistor according to the inductor voltage signal, includes: when the flyback diode is turned off, controlling the main transistor to turn on according to the inductor voltage signal; when the main transistor is turned off, turning on the flyback diode according to the preset dead time; or when the flyback diode is turned on, controlling the flyback diode to turn off according to the inductor current signal.

Optionally, when the control module 73 controls the main transistor to turn on according to the inductor voltage signal, further includes: determining the turn-on time of the main transistor; and turning off the main transistor when the turn-on time is reached.

Optionally, that the control module 73 determines the turn-on time of the main transistor, includes: determining the turn-on time of the main transistor according to a circuit parameter of the PFC totem pole circuit; wherein the circuit parameter includes at least one of the input voltage, BUS voltage, inductance, and phase-locked loop of the PFC totem pole circuit.

Optionally, the inductor voltage signal includes a high-level signal, a low-level signal, a rising edge signal, and a falling edge signal; wherein that the control module 73 controls the main transistor to turn on according to the inductor voltage signal, includes: controlling the main transistor to turn on according to the high-level signal and the low-level signal; or, controlling the main transistor to turn on according to the rising edge signal and the falling edge signal.

Optionally, the inductor current signal includes a high-level signal, a low-level signal, a rising edge signal, and a falling edge signal, or the inductor current signal is a current signal; wherein that the control module 73 controls the flyback diode to turn off according to the inductor current signal, includes: controlling the flyback diode to turn off according to the high-level signal and the low-level signal; or, controlling the flyback diode to turn off according to the rising edge signal and the falling edge signal; or, when the current signal reaches the preset current value, controlling the flyback diode to turn off.

The ZVS implementation device 70 provided in the present application can also execute the method shown in Fig. 5 and achieve the functions of the ZVS implementation device 70 in the embodiment shown in Fig. 5. The present application will not be repeated here.

In summary, the above description is only a preferred embodiment of the present application and is not intended to limit the scope of protection of the present application. Any modifications, equivalent substitutions, improvements, etc. made within the spirit and principles of the present application shall be included within the scope of protection of the present application.

The system, device, module, or unit described in the above embodiments can be implemented by computer chips or entities, or by products with certain functions. A typical implementation device is a computer. Specifically, computers can include personal computers, laptops, cellular phones, camera phones, smartphones, personal digital assistants, media players, navigation devices, email devices, game consoles, tablets, wearable devices, or any combination of these devices.

A computer readable medium, including permanent and non permanent, removable and non removable medium, can be used by any method or technology to achieve information storage. Information can be computer-readable instructions, data structures, modules of programs, or other data. Examples of storage medium for computers include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, read-only optical disc read-only memory (CD-ROM), digital versatile disc (DVD) or other optical storage, magnetic tape cartridges, magnetic disk storage or other magnetic storage devices, or any other non transmission medium that can be used to store information that can be accessed by computing devices. According to the definition in this article, computer-readable medium does not include transitory media such as modulated data signals and carriers.

It should also be noted that the terms "including", "containing" or any other variation thereof are intended to encompass non exclusive inclusion, such that a process, method, product or device that includes a series of elements not only includes those elements, but also includes other elements not explicitly listed, or also includes elements inherent to such process, method, product or device. Without further limitations, the element defined by the statement "including a..." does not exclude the existence of other identical elements in the process, method, product, or device that includes the element.

The various embodiments in the present application are described in a progressive manner, and the same and similar parts between the embodiments can be referred to each other. Each embodiment focuses on the differences from other embodiments. Especially for the system embodiment, due to its basic similarity to the method embodiment, the description is relatively simple. For relevant information, please refer to the partial explanation of the method embodiment.

## Claims

1. A PFC totem pole circuit, comprising an alternating-current power supply, an inductor, a first switch transistor, a second switch transistor, a third switch transistor, a fourth switch transistor, a current acquisition module, a voltage acquisition module, and a capacitor, wherein:
one side of the alternating-current power supply is connected to a first end of the first switch transistor and a first end of the second switch transistor, another side of the alternating-current power supply is connected to a first end of the third switch transistor and a first end of the fourth switch transistor through the current acquisition module and the inductor, a second end of the third switch transistor is connected to a second end of the first switch transistor, a second end of the fourth switch transistor is connected to a second end of the second switch transistor, the voltage acquisition module is connected in parallel with the inductor, and the capacitor is connected in parallel with the third switch transistor and the fourth switch transistor;
the current acquisition module is configured to acquire an inductor current signal of the inductor, the voltage acquisition module is configured to acquire an inductor voltage signal of the inductor, the inductor current signal is used to control a flyback diode, and the inductor voltage signal is used to control a main transistor; wherein the third switch transistor is the main transistor and the fourth switch transistor is the flyback diode, or the fourth switch transistor is the main transistor and the third switch transistor is the flyback diode.

2. The PFC totem pole circuit according to claim 1, wherein during a positive half cycle of the alternating-current power supply, the second switch transistor is turned on, the first switch transistor is turned off, the fourth switch transistor is the main transistor, and the third switch transistor is the flyback diode; and
during a negative half cycle of the alternating-current power supply, the first switch transistor is turned on, the second switch transistor is turned off, the third switch transistor is the main transistor, and the fourth switch transistor is the flyback diode.

3. The PFC totem pole circuit according to claim 1, wherein the current acquisition module comprises a shunt and a first signal sampling circuit, the shunt is connected in series with the inductor, and the first signal sampling circuit is connected in parallel with the shunt.

4. The PFC totem pole circuit according to claim 1, wherein the voltage acquisition module comprises an auxiliary winding and a second signal sampling circuit, the auxiliary winding is coupled to the inductor, and the second signal sampling circuit is connected in parallel with the auxiliary winding.

5. The PFC totem pole circuit according to claim 1, wherein the PFC totem pole circuit further comprises a driving module, an input end of the driving module is connected to an output end of the current acquisition module and an output end of the voltage acquisition module, and an output end of the driving module is connected to a control end of the third switch transistor and a control end of the fourth switch transistor;
wherein the driving module is used to control the flyback diode according to the inductor current signal, and to control the main transistor according to the inductor voltage signal.

6. The PFC totem pole circuit according to any one of claims 1-5, wherein the inductor, the current acquisition module, the voltage acquisition module, the third switch transistor, and the fourth switch transistor constitute a single-phase circuit of the PFC totem pole circuit, and the PFC totem pole circuit comprises multiple single-phase circuits, and the single-phase circuits are the same in circuit structure;
wherein a phase difference between a driving signal of an Nth phase circuit and a driving signal of an (N-1)th phase circuit is 2 π/N, a driving signal comprises the inductor current signal and the inductor voltage signal, and N is an integer greater than 1.

7. A ZVS implementation method, applied to the PFC totem pole circuit according to any one of claims 1-6, comprising:
acquiring, by a current acquisition module, an inductor current signal of an inductor;
acquiring, by a voltage acquisition module, an inductor voltage signal of the inductor;
and
controlling a flyback diode according to the inductor current signal, and controlling a main transistor according to the inductor voltage signal.

8. The method according to claim 7, wherein the current acquisition module comprises a shunt and a first signal sampling circuit, the shunt is connected in series with the inductor, and the first signal sampling circuit is connected in parallel with the shunt; wherein acquiring, by the current acquisition module, the inductor current signal of the inductor comprises:
acquiring, by the first signal sampling circuit, a first voltage between two ends of the shunt; and
processing the first voltage to obtain the inductor current signal.

9. The method according to claim 8, wherein processing the first voltage to obtain the inductor current signal comprises:
comparing the first voltage with a preset second voltage, and determining the inductor current signal according to a comparison result; or,
determining a current signal flowing through the shunt according to the first voltage and a resistance value of the shunt; and determining the current signal as the inductor current signal.

10. The method according to claim 7, wherein the voltage acquisition module comprises an auxiliary winding and a second signal sampling circuit, the auxiliary winding is coupled with the inductor, and the second signal sampling circuit is connected in parallel with the auxiliary winding; wherein acquiring, by the voltage acquisition module, the inductor voltage signal of the inductor comprises:
acquiring, by the second signal sampling circuit, a third voltage and a fourth voltage at two ends of the auxiliary winding respectively; and
comparing the third voltage with the fourth voltage, and determining the inductor voltage signal according to a comparison result.

11. The method according to claim 7, wherein controlling the flyback diode according to the inductor current signal, and controlling the main transistor according to the inductor voltage signal comprise:
controlling, upon the condition that the flyback diode is turned off, the main transistor to turn on according to the inductor voltage signal;
turning on, upon the condition that the main transistor is turned off, the flyback diode according to preset dead time; or
controlling, upon the condition that the flyback diode is turned on, the flyback diode to turn off according to the inductor current signal.

12. The method according to claim 11, wherein upon the condition of controlling the main transistor to turn on according to the inductor voltage signal, the method further comprises:
determining turn-on time of the main transistor; and
turning off the main transistor when the turn-on time is reached.

13. The method according to claim 12, wherein determining the turn-on time of the main transistor comprises:
determining the turn-on time of the main transistor according to a circuit parameter of the PFC totem pole circuit;
wherein the circuit parameter comprises at least one of an input voltage of the PFC totem pole circuit, a BUS voltage of the PFC totem pole circuit, an inductance of the PFC totem pole circuit, and a phase-locked loop of the PFC totem pole circuit.

14. The method according to claim 11, wherein the inductor voltage signal comprises a high-level signal, a low-level signal, a rising edge signal, and a falling edge signal; wherein controlling the main transistor to turn on according to the inductor voltage signal comprises:
controlling the main transistor to turn on according to the high-level signal and the low-level signal; or,
controlling the main transistor to turn on according to the rising edge signal and the falling edge signal.

15. The method according to claim 11, wherein the inductor current signal comprises a high-level signal, a low-level signal, a rising edge signal, and a falling edge signal, or the inductor current signal is a current signal; wherein controlling the flyback diode to turn off according to the inductor current signal comprising:
controlling the flyback diode to turn off according to the high-level signal and the low-level signal; or,
controlling the flyback diode to turn off according to the rising edge signal and the falling edge signal; or,
controlling the flyback diode to turn off upon the condition that the current signal reaches a preset current value.

16. An electronic device comprises:
a processor;
a memory for storing executable instructions of the processor;
wherein the processor is configured to execute the instructions to implement the method according to any one of claims 7 to 15.

17. A computer-readable storage medium, wherein when instructions therein are executed by a processor of an electronic device, the electronic device is enabled to perform the method according to any one of claims 7 to 15.
